Europäisches Patentamt

European Patent Office

Office européen des brevets

(11) Veröffentlichungsnummer: **0 256 156**
**A2**

(12) **EUROPÄISCHE PATENTANMELDUNG**

(21) Anmeldenummer: 86111309.0

(51) Int. Cl.⁴: **A61B 3/10**

(22) Anmeldetag: 15.08.86

(30) Priorität: 02.08.86 DE 8620795 U

(43) Veröffentlichungstag der Anmeldung:
24.02.88 Patentblatt 88/08

(84) Benannte Vertragsstaaten:
AT BE CH DE FR GB IT LI LU NL SE

(71) Anmelder: **J.D. Möller Optische Werke GmbH**
**Rosengarten 10**
**D-2000 Wedel(DE)**

(72) Erfinder: **Twisselmann, Lorenz, Dr.-Ing.**
**Hudenkamp 4**
**D-2081 Prisdorf(DE)**

(74) Vertreter: **Patentanwälte Dipl.-Ing. J. Richter**
**Dipl.-Ing. F. Werdermann**
**Neuer Wall 10**
**D-2000 Hamburg 36(DE)**

(54) **Gerät zur Augenuntersuchung und Kreuzspaltblende.**

(57) Die Kreuzspaltblende ist z.B. in Geräten zur Augenuntersuchung, wie Spaltlampe u.dgl., verwendbar und besteht aus zwei in einem Geräteteil (15) dicht übereinanderliegenden und um 90° zueinander versetzten Plattenpaaren (10,110) zur Ausbildung von zwei Spalten, wobei jedes Plattenpaar (10;110) aus zwei dünnen, sich gegenüberliegenden, etwa rechteckförmigen oder quadratischen Platten (11;12;111,112) besteht, von denen jede Platte (11;12;111;112) an zwei im seitlichen Bereich der Platte liegenden Anlagen (20,20a) gleitend verschieblich ist, wobei zwei Spalte ausgebildet werden, deren Ebenen in einem Abstand voneinander angeordnet sind, der der Stärke einer Platte (11;12;111;112) entspricht, so daß eine Spaltveränderung auch in kleinsten Bereichen vorgenommen werden kann und eine Justierbarkeit der Spaltparallelität möglich ist.

Fig.1

## Gerät zur Augenuntersuchung und Kreuzspaltblende

Die Erfindung betrifft ein Gerät zur Augenuntersuchung mit einer Kreuzspaltblende zur Erzeugung eines Lichtspaltes und eine Kreuzspaltblende.

Zur Erzeugung eines Spaltbildes in Geräten zur Augenuntersuchung sind verschiedene Spaltmechanismen bekannt. So ist u.a. eine Konstruktion mit zwei unabhängig voneinander veränderbaren gekreuzten Spalten bekannt, so daß ein Spalt mit veränderbarer Länge bis zu einem Rechteck-Punkt einstellbar ist. Die bekannten Konstruktionen weisen alle eine für ihren Zweck der Absperrung von Licht auffallend schwere Ausführung auf.

Die Erfindung löst die Aufgabe, für den Zweck der Spaltabbildung eine Kreuzspaltblende , z.B. für ein Augenuntersuchungsgerät und ein Augenuntersuchungsgerät mit einer Kreuzspaltblende mit einfach und damit preiswert zu fertigenden Teilen zu - schaffen, wobei sich die Kreuzspaltblende durch einfache Montage und Justierbarkeit der Spaltparallelität auszeichnet.

Zur Lösung dieser Aufgabe wird ein Gerät zur Augenuntersuchung mit einer Kreuzspaltblende vorgeschlagen, das erfindungsgemäß in der Weise ausgebildet ist, daß die Kreuzspaltblende aus zwei in einem Geräteteil dicht übereinanderliegenden und um 90° zueinander versetzten Plattenpaaren zur Ausbildung von zwei Spalten besteht, und daß jedes Plattenpaar aus zwei dünnen, sich gegenüberliegenden, etwa rechteckförmigen oder quadratischen Platten besteht, von denen jede Platte an zwei im seitlichen Bereich der Platte liegenden Anlagen gleitend verschieblich ist,wobei zwei Spalte ausgebildet sind, deren Ebenen in einem Abstand voneinander angeordnet sind, der der Stärke einer Platte entspricht.

Mit einer derart ausgebildeten Kreuzspaltblende ist es möglich, in Geräten zur Augenuntersuchung ein Spaltbild unter Verwendung eines veränderbaren Spaltes zu erzeugen. Besonders vorteilhaft ist dabei, daß zwei Spalte gebildet werden, deren Ebenen nur den Abstand der Plattenstärke voneinander haben, so daß die beiden Spaltebenen fast ineinanderübergehend sind.

Die konstruktive Ausgestaltung der Kreuzspaltblende ist einfach und beschränkt sich auf wenige preiswert herzustellende mechanische Teile, wobei gewährleistet ist, daß die Spaltveränderung auch in kleinsten Bereichen mühelos vorgenommen werden kann. Die Montage der einzelnen Teile ist einfach; darüber hinaus ist eine Justierbarkeit der Spaltparallelität möglich.

Nach einer weiteren Ausgestaltung der Erfindung weist jede Platte vorzugsweise benachbart zu einem ihrer beiden Seitenränder einen senkrecht zur Plattenebene stehenden Stift auf, der mit einer die Platte gegen die Anlage ziehenden Feder verbunden ist, wobei die Anlage für jede Platte aus zwei im Abstand voneinander angeordneten Stiften oder zwei freifliegend angeordneten Führungsrollen besteht oder einstückig als Führungsstab ausgebildet ist.

Die Platten können in ihren Ebenen auf einer Grundplatte mittels Federkraft oder magnetischer Kräfte oder auf der Grundplatte mittels Andruckfedern gehalten sein, wobei die Halterung der Platten auch mittels eines Magnetfeldes erfolgen kann. Hierzu bestehen die Platten aus einem ferromagnetischen Werkstoff und sind auf der Grundplatte mittels in der Grundplatte angeordneter Permanentmagneten gehalten.

Die Erfindung sieht ferner eine Ausgestaltung vor, nach der jede Platte mittels eines Schwenkhebels längs der Anlagen verschiebbar ist, der mit seinem einen Ende an dem Stift der Platte und mit seinem anderen Ende mittels eines weiteren Stiftes an einem Segment angelenkt ist, wobei die Segmente aller Platten auf einer Kreisbahn bewegbar sind. Jeder Schwenkhebel ist dabei an mindestens einem seiner Enden mit einem Langloch versehen, wobei die beiden Stifte in in jedem Schwenkhebel ausgebildeten lochartigen Durchbrechungen mittels Federn auf größtmöglichen Abstand haltbar sind und beim Schließen eines Spaltes durch Drehung des Segmentes das Langloch eine weitere Bewegung der Stifte gegen die Kraft der Feder zuläßt, ohne daß Teile zerstört werden, bevor ein fester Anschlag die Bewegung der Segmente beendet.

Eine weitere Ausgestaltung der Erfindung sieht vor, daß die Anzahl der den Platten zugeordneten Segmente der Anzahl der Platten entspricht und daß die Segmente an einem ringförmigen Zahnkranz, der an seiner umlaufenden Innenseite Eingriffzähne aufweist, angeordnet sind, wobei die Segmente durch Ausnehmungen in einem weiteren Zahnranz mit an seiner Innenseite ausgebildeten Eingriffzähnen hindurch in den Innenraum der Betätigung der Platten der beiden Plattenpaare hineinragend sind, oder daß die Anzahl der den Platten zugeordneten Segmente der Anzahl der Platten entspricht, daß den Platten des Plattenpaares die Segmente und den Platten des Plattenpaares die Segmente zugeordnet sind und daß die Segmente auf der Innenwandfläche eines Zahnkranzes, der an seiner umlaufenden Innenseite Eingriffzähne und für den Durchgriff der Segmente des Zahnkranzes Ausnehmungen aufweist, angeordnet sind, wobei die Segmente zwischen den Segmenten in den die Platten und deren Betätigungsvorrichtungen aufnehmenden Innenraum zur Betätigung der Platten des Plattenpaares des anderen Plattenpaares mittels der Segmente betätigbar sind.

Ferner ist das Geräteteil für eine Drehung im äußeren Umfang von einem äußeren Zahnkranz gebildet, der aus einer an seinem ringförmigen bzw. scheibenförmigen Bodenteil befestigten Grundplatte besteht und der an seiner umlaufenden Innenseite mit einer Eingriffszähnung versehen ist, wobei ein umlaufender Bund für die Drehung in einem Gehäuse zu lagern ist.

Die Segmente des Zahnkranzes sind im gleichen Radius der Segmente des Zahnkranzes liegend; sie dienen jedoch zur Betätigung des um 90° versetzt angeordneten Plattenpaares.

Zur Justierung der Spaltparallelität ist die Anlage mit dem größten Abstand zur Mitte des Geräteteils an einem elastisch verformbaren Teil der Grundplatte angebracht und mit je einem Winkelteil verstellbar, das mittel einer Schraube verschwenkbar ist.

Die Erfindung betrifft auch eine Kreuzspaltblende mit den in den Ansprüchen 14 bis 26 gekennzeichneten Merkmalen, die nicht nur in Augenuntersuchungsgeräten verwendbar ist, sondern überall dort eingesetzt werden kann, wo Anordnungen zur Erzeugung eines Lichtspaltes benötigt werden; so z.,B. bei Spektographen od.dgl..

Im folgenden wird der Gegenstand der Erfindung in den Zeichnungen erläutert. Es zeigt

Fig. 1 in einer Ansicht von vorn eine Kreuzspaltblende zur Erzeugung eines Lichtspaltes,

Fig. 2 einen senkrechten Schnitt durch die Kreuzspaltblende und

Fig. 3 in einem Teilschnitt die Verstellbarkeit der Anlagen unter Verwendung einer Schraube mittels eines Winkelteils.

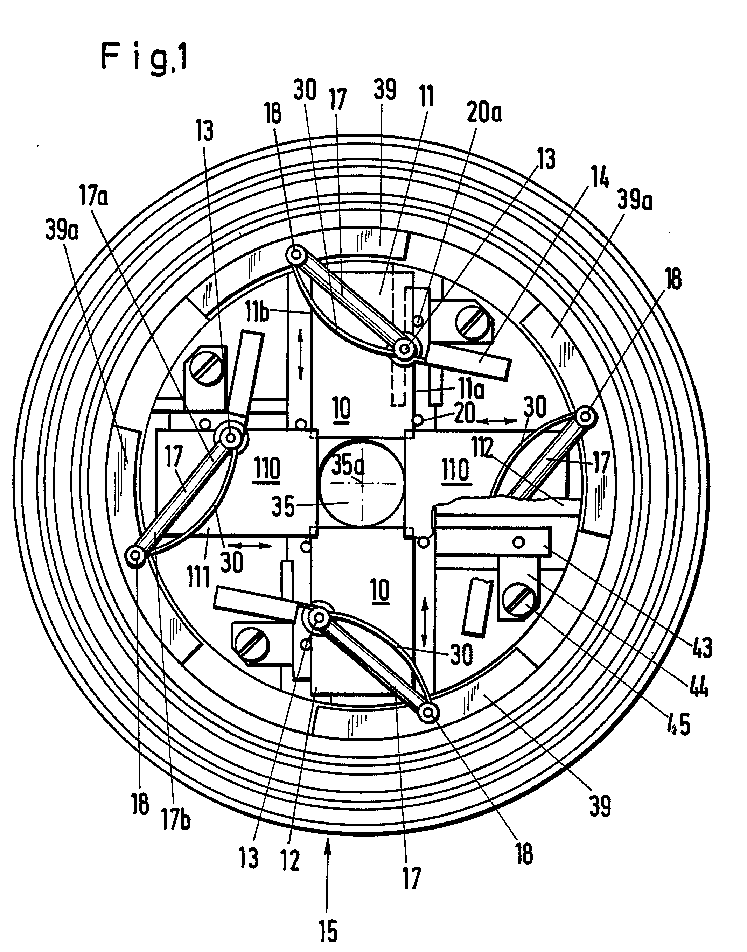

Die Kreuzspaltblende zur Erzeugung eines Lichtspaltes besteht aus einem in einem in Fig. 1 nicht dargestellten Gerät zur Augenuntersuchung anzuordnenden Geräteteil 15, das aus zwei auf einer Grundplatte 25 angeordneten Plattenpaaren 10,110 besteht, die dicht übereinanderliegend und um 90° zueinander versetzt sind und zur Ausbildung von zwei Spalten dienen.

Jedes Plattenpaar 10,110 besteht aus zwei dünnen, sich gegenüberliegenden, etwa rechteckförmigen oder quadratischen Platten 11,12 und 111,112, wobei die Platten 11,12 das Plattenpaar 10 und die Platten 111,112 das Plattenpaar 110 bilden. Dabei liegen die Platten 11,12 und die Platten 111,112 sich gegenüber, so daß die beiden Plattenpaare 10,110 die aus Fig. 1 ersichtliche kreuzartige Anordnung aufweisen.

Jede Platte 11,12,111,112 ist in ihrem seitlichen Bereich an zwei Anlagen 20,20a gleitend verschieblich.

Da alle Platten 11,12,111,112 gleich ausgebildet sind, wird nachstehend die Platte 11 beschrieben.

Die beiden Längsseitenränder bzw. -kanten der Platte 11 sind mit 11a bezeichnet. Mittels des Seitenrandes 11a liegt die Platte 11 an den beiden Anlagen 20,20a an, und zwar derart, daß die Platte 11 an den beiden Anlagen 20,20a geführt ist, wenn die Platte 11 verschoben wird.

Benachbart zu ihrem Seitenrand 11a weist die Platte 11 einen senkrecht zur Plattenebene stehenden Stift 13 auf, der mit einer Feder 14 derart verbunden ist, daß die Platte 11 vermittels dieser Feder 14 gegen die Anlage 20,20a gezogen wird, so daß bei einem Verschieben der Platte 11 eine einwandfreie Geradeausführung gegeben ist und die Platte 11 nicht von der Anlage 20,20a abheben kann.

Die Anlage 20,20a für die Platte 11 und in gleicher Weise auch für die weiteren Platten 12,111,112 besteht nach dem in Fig. 1 gezeigten Ausführungsbeispiel aus zwei im Abstand voneinander angeordneten, senkrecht stehenden Stiften aus einem möglichst verschleißfesten Werkstoff, wie z.B. Stahl od.dgl., die auch mit freifliegend angeordneten Führungsrollen versehen sein können. Es besteht jedoch auch die Möglichkeit, anstelle der beiden Anlagen 20,20a einen einstückigen Führungsstab zu verwenden.

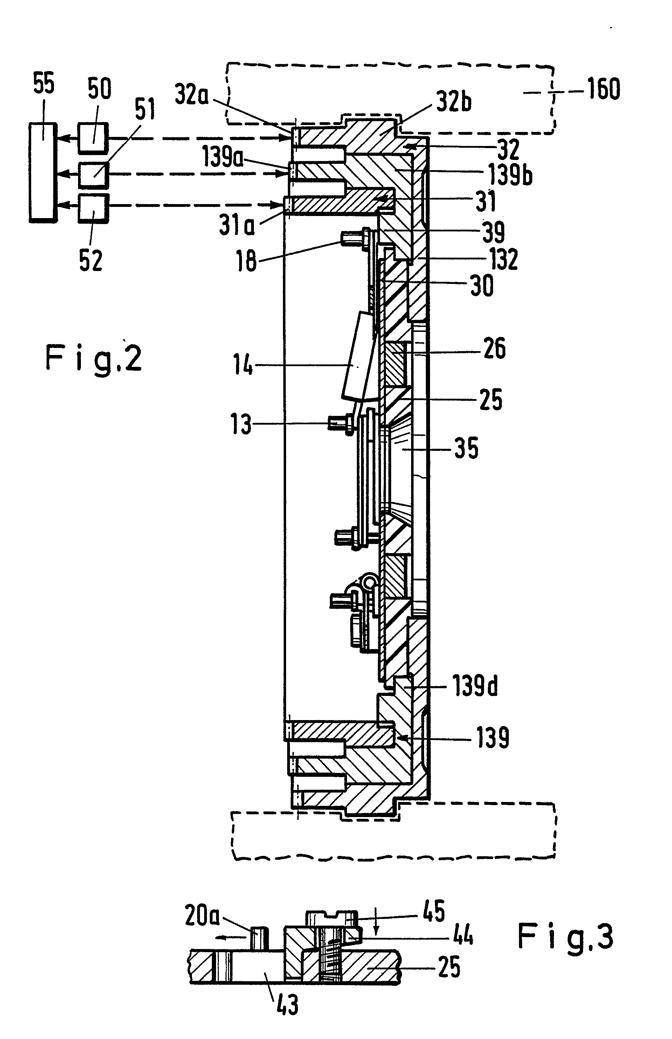

Für eine Justierung der Spaltparallelität ist für jede Platte 11,12,111,112 die Anlage 20a mit dem größten Abstand zur Mitte 35 des Geräteteiles 15 an einem elastisch verformbaren Teil 43 der Grundplatte 25 angebracht und mittels eines Winkelteils 44 verstellbar, wobei die Verstellbarkeit bzw. Verschwenkbarkeit mittels einer bei 45 angedeuteten Schraube erfolgt, d.h. das Winkelteil 44 ist mittels der Schraube 45 kippbar (Fig.3).

Die Halterung der Platte 11 und ebenso auch der weiteren Platten 12,111,112 in ihren Ebenen auf der Grundplatte 25 erfolgt mittels Federkraft oder mittels magnetischer Kräfte. Im ersteren Falle ist die Platte 11 auf der Grundplatte 25 mittels einer in der Zeichnung nicht dargestellten Andruckfeder gehalten. Besteht die Platte 11 aus ferromagnetischem, d.h. magnetisierbarem Werkstoff, dann sind auf der Unterseite der Grundplatte 25 Permanentmagnete 26 angeordnet, vermittels der die Platten 11,12,111,112 auf der Grundplatte 25 gehalten sind, so daß ein Verschieben der Platten 11,12,111,112 in Richtung der in Fig. 1 angedeuteten Pfeile möglich ist.

Um jede Platte 11,12,111,112 verschieben zu können, ist jede Platte über einen Schwenkhebel 17 mit einem Segment 39 bzw. 39a verbunden, wobei die Segmente an Drehkränzen befestigt sind. Da auch in diesem Falle jede Platte in gleicher Weise betätigt wird, wird nachstehend die Betätigungsvorrichtung für die Platte 11 beschrieben.

Diese Betätigungsvorrichtung für die Platte 11 besteht aus dem Schwenkhebel 17, der mit seinem einen Ende 17a an dem Stift 13 der Platte 11 und mit seinem anderen Ende 17b mittels eines senkrecht stehenden Stiftes 18 an einem Segment 39 angelenkt ist, wobei dieser Stift 18 senkrecht stehend in dem Segment 39 angeordnet ist. Diese Segmente 39,39a für die Platten 11,12,111,112 sind gleich ausgebildet. Die Segmente 39,39a aller Platten 11,12,111,112 sind auf einer Kreisbahn bewegbar, so daß alle Segmente Kreisbewegungen durchführen. Zur Anordnung des Schwenkhebels 17 an den Stiften 13 und 18 weist der Schwenkhebel 17 an seinen Enden 17a,17b Bohrungen bzw. Durchbohrungen auf, in die die Enden der Stifte 13 bzw. 18 eingreifen bzw. aufgenommen werden (Fig.1 und 2). Der Schwenkhebel 17 weist an einem seiner Enden ein Langloch auf, welches den ihm zugeordneten Stift aufnimmt. Die Stifte 13 und 18 sind in den Bohrungen bzw. Durchbohrungen des Schwenkhebels 17 mittels Federn 30 zur Anlage gebracht, die von außen derart auf die Stifte 13,18 einwirken, daß das Schließen eines Spaltes auch dann ohne Beschädigung gewährleistet ist, wenn die Drehung des Segmentes 39 bzw. 39a mit einem Anschlag erst kurz danach begrenzt wird.

Die Anzahl der der Platten 11,12,111,112 zugeordneten Segmente 39,39a entspricht der Anzahl der Platten. Nach einer Ausführungsform sind die Segmente 39 an einem ringförmigen Zahnkranz 139 angeordnet. Dieser Zahnkranz 139 besteht aus einer ringförmigen Scheibe 139d mit einem an deren Umfang abgewinkelten, umlaufenden, stegartigen Abschnitt 139b, der an seiner umlaufenden Stirnseite,und somit an der Innenseite des Zahnkranzes 139, Eingriffzähne 139a für ein in der Zeichnung nicht dargestelltes Antriebsritzel aufweist. Die Segmente 39 sind Teil des Zahnkranzes 139. Die Segmente 39 reichen dabei zur Betätigung der Platten 11,12 des Plattenpaares 10 durch Ausnehmungen zwischen den Segmenten 39a des Zahnkranzes 31 hindurch in den Innenraum des Geräteteiles 15, der die Platten 11,12,111,112 und deren Betätigungsvorrichtungen aufnimmt. Durch Drehen des Zahnkranzes 139 erfolgt vermittels der Segmente 39 und der Schwenkhebel 17 das Verschieben der Platten 11,12 zur Ausbildung von einem Spalt, dessen Ebene in einem Abstand von dem von den Platten 111,112 gebildeten Spalt angeordnet ist, der der Stärke einer Platte entspricht.

Den Platten 11,12 des Plattenpaares 10 sind die Segmente 39 zugeordnet, während den Platten 111,112 des Plattenpaares 110 die Segmente 39a zugeordnet sind (Fig.1).

Die Segmente 39a für die Platten 111,112 des Plattenpaares 110 sind an einem innen liegenden Zahnkranz 31 angeordnet und sind Teile dieses Zahnkranzes. Dieser Zahnkranz 31 besteht aus einem Ring mit an der Innenseite ausgebildeten Eingriffzähnen 31a, die mit den Zähnen eines in der Zeichnung nicht dargestellten Antriebsritzels kämmen, wobei die Segmente 39 zwischen den Segmenten 39a in den die Platten 11,12,111,112 und deren Betätigungsvorrichtung 17 aufnehmenden Innenraum zur Betätigung der Platten 11,12 des Plattenpaares 10 hineinragen, während die Platten 111,112 des anderen Plattenpaares 110 mittels der Segmente 39a und der Schwenkhebel 17 betätigbar sind. Wie Fig. 2 erkennen läßt, wird der Zahnkranz 31 von dem Zahnkranz 139 umgriffen, so daß der Zahnkranz 31 in dem Zahnkranz 139 geführt und gehalten ist. Mit Innenseiten der Zahnkränze sind diejenigen umlaufenden Bereiche der Zahnkränze bezeichnet, die dem Innenraum benachbart sind, der die Betätigungsvorrichtungen 17 aufnimmt (Fig.2).

Die Segmente 39a des Zahnkranzes 31 sind im Radius der Segmente 39 des Zahnkranzes liegend und dienen zur Betätigung des um 90° versetzt angeordneten Plattenpaares.

Das Geräteteil 15, welches aus dem Zahnkranz 139, dem Zahnkranz 31, den Platten 11,12,111,112 der beiden Plattenpaare 10,110 und der Betätigungsvorrichtung 17 in Verbindung mit den Segmenten 39,39a gebildet wird, weist ferner einen äußeren Zahnkranz 32 auf, der aus einem ringförmigen oder scheibenförmigen Bodenteil 132 besteht, an dem die Grundplatte 25 befestigt ist. Des weiteren weist der äußere Zahnkranz 32 an seinem Umfang einen abgewinkelten, stegartigen Abschnitt, d.h. umlaufenden Bund 32b, auf, wobei dieser umlaufende Bund 32b für die Drehung in einem in Fig. 2 bei 160 angedeuteten Gehäuse gelagert ist, wobei es sich bei dem Gehäuse 160 z.B. um das Gehäuse einer Spaltlampe eines an sich bekannten Augenuntersuchungsgerätes handeln kann, das z.B. als Spaltlampenmikroskop ausgebildet sein kann, das mit einer Spaltleuchte bzw. Spaltlampe ausgerüstet ist, und zwar zur Erzielung eines sehr hellen, spaltförmigen, scharf begrenzten parallelstrahligen Lichtbündels. Bei seitlichem Lichteinfall ist dann eine genaue Untersuchung z.B. des vorderen Augenabschnittes und der brechenden Medien möglich. Bei Verwendung geeigneter Zusatzeinrichtungen wie z.B. Linse, Dreispiegelglas u.dgl. können auch hintere Glaskörper u.dgl. untersucht werden. Der Zahnkranz 32 ist an seiner umlaufenden Innenseite mit einer Eingriffzähnung 32a versehen. Die Zähne 32a des Zahnkranzes 32 kämmen mit den Zähnen eines in der Zeichnung nicht dargestellten Antriebsritzels, so daß über den Zahnkranz 32 die gesamte Baueinheit um ihren Mittelpunkt 35 verdrehbar ist, wobei jedoch auch eine Drehung nur im äußeren Umfang möglich ist. Bei 35a ist in Fig. 1 die mittige Durchbrechung im Geräteteil 15 angedeutet.

Die Segmente 39 sind somit Teile des Zahnkranzes 139, während die Segmente 39a Teil des Zahnkranzes 31 sind. Alle vier Segmente liegen dabei im Innenraum des Zahnkranzes 31 in der gleichen Ebene. Dafür sind in dem Zahnkranz 31 Ausnehmungen eingefräst, durch die die Segmente 39 des Zahnkranzes 139 in den Innenraum vom Zahnkranz 31 ragen. In die Zähne der drei Zahnkränze 31,39 und 32 greifen in der Zeichnung nicht dargestellte Antriebsräder ein. Wie Fig. 2 zeigt, liegen die Eingriffzähnungen 32a,139a,31a der Zahnkränze in etwa in einer Ebene; sie können auch zueinander geringfügig in dieser Ebene versetzt sein, was durch entsprechende Bemessungen der Zahnkränze erreicht wird.

Der Grundkörper 25 ist mit dem Boden 132 des Zahnkranzes 32 verschraubt. Mit seinem äußeren Bord, das über die Segmente greift, hält der Grundkörper 25 die Zahnkränze 139 und 31 im äußeren Zahnkranz 32 mit dem Boden 132, in dem sie drehbar gelagert sind.

Die in Fig. 2 bei 50,51,52 angedeuteten Antriebe für den Zahnkranz 139, den Zahnkranz 31 und den Zahnkranz 32 sind vorteilhafterweise in einem Steuerwerk bzw. Programmschaltwerk 55 zusammengeführt, über das die Verstellbarkeit der Platten 11,12 und der Platten 111,112 in Anpassung an die jeweiligen Erfordernisse vorgenommen wird.

## Ansprüche

1. Gerät zur Augenuntersuchung mit einer Kreuzspaltblende zur Erzeugung eines Lichtspaltes, dadurch gekennzeichnet, daß die Kreuzspaltblende aus zwei in einem Geräteteil (15) dicht übereinanderliegenden und um 90° zueinander versetzten Plattenpaaren (10,110) zur Ausbildung von zwei Spalten besteht, und daß jedes Plattenpaar (10;110) aus zwei dünnen, sich gegenüberliegenden, etwa rechteckförmigen oder quadratischen Platten (11,12;111,112) besteht, von denen jede Platte (11;12;111;112) an zwei im seitlichen Bereich der Platte liegenden Anlagen (20,29a) gleitend verschieblich ist, wobei zwei Spalte ausgebildet sind, deren Ebenen in einem Abstand voneinander angeordnet sind, der der Stärke einer Platte (11;12;111;112) entspricht.

2. Gerät nach Anspruch 1, dadurch gekennzeichnet, daß jede Platte (11;12;111;112) vorzugsweise benachbart zu einem (11a) ihrer beiden Seitenränder (11a,11b) einen senkrecht zur Plattenebene stehenden Stift (13) aufweist, der mit einer die Platte gegen die Anlage (20,20a) ziehenden Feder (14) verbunden ist.

3. Gerät nach Anspruch 1 und 2, dadurch gekennzeichnet, daß die Anlage (20,20a) für jede Platte (11;12;111; 112) aus zwei im Abstand voneinander angeordneten Stiften oder zwei freifliegend angeordneten Führungsrollen besteht oder einstückig als Führungsstab ausgebildet ist.

4. Gerät nach Anspruch 1 bis 3, dadurch gekennzeichnet, daß die Platten (11,12,111,112) in ihren Ebenen auf einer Grundplatte (25) mittels Federkraft oder magnetischer Kräfte gehalten sind.

5. Gerät nach Anspruch 4, dadurch gekennzeichnet, daß die Platten (11,12,111,112) auf der Grundplatte (25) mittels Andruckfedern gehalten sind.

6. Gerät nach Anspruch 4, dadurch gekennzeichnet, daß die Platten (11,12,111,112) aus einem ferromagnetischen Werkstoff bestehen und auf der Grundplatte (25) mittels in der Grundplatte angeordneter Permanentmagneten (26) gehalten sind.

7. Gerät nach Anspruch 1 bis 6, dadurch gekennzeichnet, daß jede Platte (11;12;111;112) mittels eines Schwenkhebels (17) längs der Anlagen (20,20a) verschiebbar ist,der mit seinem einen Ende (17a) an dem Stift (13) der Platte (11;12;111;112) und mit seinem anderen Ende (17b) mittels eines Stiftes (18) an einem Segment (39,39a) angelenkt ist, wobei die Segmente (39,39a) aller Platten (11,12,111,112) auf einer Kreisbahn bewegbar sind.

8. Gerät nach Anspruch 7, dadurch gekennzeichnet, daß jeder Schwenkhebel (17) an mindestens einem seiner Enden mit einem Langloch versehen ist, wobei die beiden Stifte (13,18) in in jedem Schwenkhebel (17) ausgebildeten , lochartigen Durchbrechungen mittels Federn (30) auf größtmöglichem Abstand haltbar sind und beim Schließen eines Spaltes durch Drehung des Segmentes (39;39a) das Langloch eine weitere Bewegung der Stifte (13,18) gegen die Kraft der Feder (30) zuläßt, ohne daß Teile zerstört werden, bevor ein fester Anschlag die Bewegung der Segmente beendet.

9. Gerät nach Anspruch 1 bis 8, dadurch gekennzeichnet, daß die Anzahl der den Platten (11,12,111,112) zugeordneten Segmente (39,39a) der Anzahl der Platten (11,12,111,112) entspricht und daß die Segmente (39) an einem ringförmigen Zahnkranz (139), der an seiner umlaufenden Innenseite Eingriffzähne (139a) aufweist, angeordnet sind, wobei die Segmente (39) durch Aüsnehmungen in einem weiteren Zahnkranz (31) mit an seiner Innenseite ausgebildeten Eingriffzähnen (31a) hindurch in den Innenraum zur Betätigung der Platten (11,12,111,112) der beidën Plattenpaare (10,110) hineinragend sind.

10. Gerät nach Anspruch 1 bis 8, dadurch gekennzeichnet, daß die Anzahl der den Platten (11,12;111,112) zugeordneten Segmente (39,39a) der Anzahl der Platten (11,12;111,112) entspricht, daß den Platten (11,12) des Plattenpaares (10) die Segmente (39) und den Platten (111,112) des Plattenpaares (110) die Segmente (39a) zugeordnet sind und daß die Segmente (39a) auf der Innenwandfläche eines Zahnkranzes (31), der an seiner umlaufenden Innenseite Eingriffzähne (31a) und für den Durchgriff der Segmente (39) des Zahnkranzes (139) Ausnehmungen aufweist, angeordnet sind, wobei die Segmente (39a) zwischen den Segmenten (39) in den die Platten (11,12,111,112) und deren Betätigungsvorrichtungen (17) aufnehmenden Innenraum zur Betätigung der Platten (111,112) des Plattenpaares (10,110) des anderen Plattenpaares (10) mittels der Segmente (39) betätigbar sind.

11. Gerät nach Anspruch 1 bis 10, dadurch gekennzeichnet, daß die Segmente (39a) des Zahnkranzes (31) im gleichen Radius der Segmente (39) des Zahnkranzes (139) liegend sind, jedoch zur Betätigung des um 90° versetzt angeordneten Plattenpaares dienen.

12. Gerät nach Anspruch 1 bis 11, dadurch gekennzeichnet, daß das Geräteteil (15) für eine Drehung im äußeren Umfang von einem äußeren Zahnkranz (32) gebildet ist, der aus einer an seinem ringförmigen bzw. scheibenförmigen Bodenteil befestigten Grundplatte (25) besteht und der an seiner umlaufenden Innenseite mit einer Eingriffszähnung (32a) versehen ist, wobei ein umlaufender Bund (32b) für die Drehung in einem Gehäuse zu lagern ist.

13. Gerät nach Anspruch 1 bis 12, dadurch gekennzeichnet, daß zur Justierung der Spaltparallelität jede Anlage (20a) mit dem größten Abstand zur Mitte des Geräteteils (15) an einem elastisch verformbaren Teil (43) der Grundplatte (25) angebracht und mit je einem Winkelteil (44) verstellbar ist, das mittels einer Schraube (45) verschwenkbar ist (Fig.3).

14. Kreuzspaltblende, insbesondere in einem Gerät zur Augenuntersuchung, dadurch gekennzeichnet, daß die Kreuzspaltblende aus zwei in einem Geräteteil (15) dicht übereinanderliegenden und um 90° zueinander versetzten Plattenpaaren (10,110) zur Ausbildung von zwei Spalten besteht, und daß jedes Plattenpaar (10;110) aus zwei dünnen, sich gegenüberliegenden, etwa rechteckförmigen oder quadratischen Platten (11,12;111,112) besteht, von denen jede Platte (11,12;111,112) an zwei im seitlichen Bereich der Platte liegenden Anlagen (20,20a) gleitend verschieblich ist, wobei zwei Spalte ausgebildet sind, deren Ebenen in einem Abstand voneinander angeordnet sind, der der Stärke einer Platte (11,12;111,112) entspricht.

15. Kreuzspaltblende nach Anspruch 14, dadurch gekennzeichnet, daß jede Platte (11,12;111,112) vorzugsweise benachbart zu einem (11a) ihrer beiden Seitenränder (11a,11b) einen senkrecht zur Plattenebene stehenden Stift (13) aufweist, der mit einer die Platte gegen die Anlage (20,20a) ziehenden Feder (14) verbunden ist.

16. Kreuzspaltblende nach Anspruch 14 und 15, dadurch gekennzeichnet, daß die Anlage (20,20a) für jede Platte (11;12;111;112) aus zwei im Abstand voneinander angeordneten Stiften oder zwei freifliegend angeordneten Führungsrollen besteht oder einstückig als Führungsstab ausgebildet ist.

17. Kreuzspaltblende nach Anspruch 14 bis 16, dadurch gekennzeichnet, daß die Platten (11,12,111,112) in ihren Ebenen auf einer Grundplatte (25) mittels Federkraft oder magnetischer Kräfte gehalten sind.

18. Kreuzspaltblende nach Anspruch 17, dadurch gekennzeichnet, daß die Platten (11,12,111,112) auf der Grundplatte (25) mittels Andruckfedern gehalten sind.

19. Kreuzspaltblende nach Anspruch 17, dadurch gekennzeichnet, daß die Platten (11,12,111,112) aus einem ferromagnetischen Werkstoff bestehen und auf der Grundplatte (25) mittels in der Grundplatte angeordneter Permanentmagneten (26) gehalten sind.

20. Kreuzspaltblende nach Anspruch 14 bis 19, dadurch gekennzeichnet, daß jede Platte (11;12;111;112) mittels eines Schwenkhebels (17) längs der Anlagen (20,20a) verschiebbar ist, der mit seinem einen Ende (17a) an dem Stift (13) der Platte (11;12;111; 112) und mit seinem anderen Ende (17b) mittels eines Stiftes (18) an einem Segment (39,39a) angelenkt ist, wobei die Segmente (39,39a) aller Platten (11,12,111,112) auf einer Kreisbahn bewegbar sind.

21. Kreuzspaltblende nach Anspruch 20, dadurch gekennzeichnet, daß jeder Schwenkhebel (17) an mindestens einem seiner Enden mit einem Langloch versehen ist, wobei die beiden Stifte (13,18) in in jedem Schwenkhebel (17) ausgebildeten lochartigen Durchbrechungen mittels Federn (30) auf größtmöglichem Abstand haltbar sind und beim Schließen eines Spaltes durch Drehung des Segmentes (39;39a) das Langloch eine weitere Bewegung der Stifte (13,18) gegen die Kraft der Feder (30) zuläßt, ohne daß Teile zerstört werden, bevor ein fester Anschlag die Bewegung der Segmente beendet.

22. Kreuzspaltblende nach Anspruch 14 bis 21, dadurch gekennzeichnet, daß die Anzahl der den Platten (11,12,111,112) zugeordneten Segmente (39,39a) der Anzahl der Platten (11,12,111,112) entspricht und daß die Segmente (39) an einem ringförmigen Zahnkranz (139), der an seiner umlaufenden Innen seite Eingriffzähne (139a) aufweist, angeordnet sind, wobei die Segmente (39) durch Ausnehmungen in einem weiteren Zahnkranz (31) mit an seiner Innenseite ausgebildeten Eingriffzähnen (31a) hindurch in den Innenraum zur Betätigung der Platten (11,12,111,112) der beiden Plattenpaare (10,110) hineinragend sind.

23. Kreuzspaltblende nach Anspruch 14 bis 21, dadurch gekennzeichnet, daß die Anzahl der den Platten (11,12;111,112) zugeordneten Segmente (39,39a) der Anzahl der Platten 11,12;111,112) entspricht, daß den Platten (11,12) des Plattenpaares (10) die Segmente (39) und den Platten (111,112) des Plattenpaares (110) die Segmente (39a) zugeordnet sind und daß die Segmente (39a) auf der Innenwandfläche eines Zahnkranzes (31), der an seiner umlaufenden Innenseite Eingriffzähne (31a) und für den Durchgriff der Segmente (39) des Zahnkranzes (139) Ausnehmungen aufweist, angeordnet sind, wobei die Segmente (39a) zwischen den Segmenten (39) in den die Platten (11,12,111,112) und deren Betätigungsvorrichtungen (17) aufnehmenden Innenraum zur Betätigung der Platten (111,112) des Plattenpaares (10,110) des anderen Plattenpaares (10) mittels der Segmente (39) betätigbar sind.

24. Kreuzspaltblende nach Anspruch 14 bis 23, dadurch gekennzeichnet, daß die Segmente (39a) des Zahnkranzes (31) im gleichen Radius der Segmente (39) des Zahnkranzes (139) liegend sind, jedoch zur Betätigung des um 90° versetzt angeordneten Plattenpaares dienen.

25. Kreuzspaltblende nach Anspruch 14 bis 24, dadurch gekennzeichnet, daß das Geräteteil (15) für eine Drehung im äußeren Umfang von einem äußeren Zahnkranz (32) gebildet ist, der aus einem ringförmigen bzw. scheibenförmigen Bodenteil (132) mit an diesem befestigter Grundplatte (25) besteht und der an seiner umlaufenden Innenseite mit einer Eingriffszähnung (32a) versehen ist, wobei ein umlaufender Bund (32b) für die Drehung in einem Gehäuse zu lagern ist.

26. Kreuzspaltblende nach Anspruch 14 bis 25, dadurch gekennzeichnet, daß zur Justierung der Spaltparallelität jede Anläge (20a) mit dem größten Abstand zur Mitte des Geräteteils (15) an einem elastisch verformbaren Teil (43) der Grundplatte (25) angebracht und mit je einem Winkelteil (44) verstellbar ist, das mittels einer Schraube (45) verschwenkbar ist.

Fig.1

0 256 156

Fig.2

Fig.3